# FASCICULE DE BREVET EUROPEEN

(11) **EP 0 667 298 B1**
(45) Date de publication et mention de la délivrance du brevet: **20.05.1998**
(21) Numéro de dépôt: 95420024.2
(22) Date de dépôt: 02.02.1995
(51) Int. Cl.: B65D 39/16, B29C 45/14

(54) **Bouchon surmoulé**
Umgossener Stopfen
Overmoulded stopper

(30) Priorité: 02.02.1994 FR 9401357
(43) Date de publication de la demande: 16.08.1995
(73) Titulaire: Rodrigues, Antonio, 01100 Oyonnax (FR)
(72) Inventeur: Bolle, Jean-Pierre, F-01590 Dortan (FR)
(74) Mandataire: Myon, Gérard Jean-Pierre

(56) Documents cités:
- EP-A- 0 166 036
- DE-C- 819 654
- FR-A- 1 112 313
- FR-A- 2 524 379

## Description

La présente invention a trait à un bouchon comportant une partie cylindrique en liège sur laquelle est fixée une capsule en matière plastique. Ce type de bouchon est destiné notamment au domaine alimentaire.

On connaît des bouchons de ce genre qui comprennent une partie cylindrique en liège ou corps dont l'une des extrémités est solidaire d'une capsule en matière plastique ou tête qui est fixée au moyen de colles généralement toxiques. Les bouchons destinés au domaine alimentaire doivent répondre à une série de normes très rigoureuses. L'emploi de colles ne permet pas, d'une part du fait de leur toxicité, de répondre aux normes strictes du milieu alimentaire et d'autre part, du fait de la faible adhérence entre la capsule et le liège, de satisfaire aux conditions de solidité demandées afin que ladite tête ne s'arrache pas du corps en liège lors, par exemple, de l'ouverture du récipient recevant ledit bouchon.

On connaît également d'après le brevet DE-819 654 un bouchon comportant une tête pourvue en son milieu d'un goujon fileté qui pénètre à l'intérieur d'un alésage ménagé dans le corps conique formant l'étanchéité avec le goulot de la bouteille.

Les dents prévues à l'intérieur de la tête et le goujon fileté ne sont pas suffisants pour résister à l'effort de traction et de rotation qu'il faut exercer sur le bouchon pour le retirer du goulot de la bouteille.

En effet, la pénétration des dents lors de la rotation risque de détériorer la surface du corps conique si ce dernier est réalisé en liège. Enfin le goujon fileté ne résistera pas à la traction, car la liaison avec le liège est très fragile et sous l'effort, la tête risque de s'arracher du corps conique.

C'est à ces inconvénients qu'entend plus particulièrement répondre la présente invention.

Le bouchon suivant la présente invention comprend une capsule ou tête en matière plastique surmoulée autour d'un corps cylindrique en liège, ladite tête comportant un fond bordé sur sa périphérie d'une jupe verticale, un noyau s'étendant au milieu du fond pour coopérer lors du surmoulage avec un trou borgne ménagé au centre dudit corps, tandis qu'une série de dents dont le diamètre interne est inférieur à celui externe du corps sont prévues pour pincer ce dernier sur une hauteur suffisante entre lesdites dents et le noyau lors du surmoulage.

Le dessin annexé, donné à titre d'exemple, permettra de mieux comprendre l'invention, les caractéristiques qu'elle présente et les avantages qu'elle est susceptible de procurer :
Fig. 1 est une vue éclatée montrant en position ouverte les deux parties d'un moule à l'intérieur duquel est placé le corps en liège d'un bouchon suivant l'invention.
Fig. 2 est une coupe illustrant le moule en position fermée.
Fig. 3 est une coupe de détail à plus grande échelle suivant III-III (fig. 2).
Fig. 4 montre le bouchon suivant la présente invention obtenu après surmoulage de la tête.
Fig. 5 est une coupe de détail à plus grande échelle suivant V-V (fig. 4).

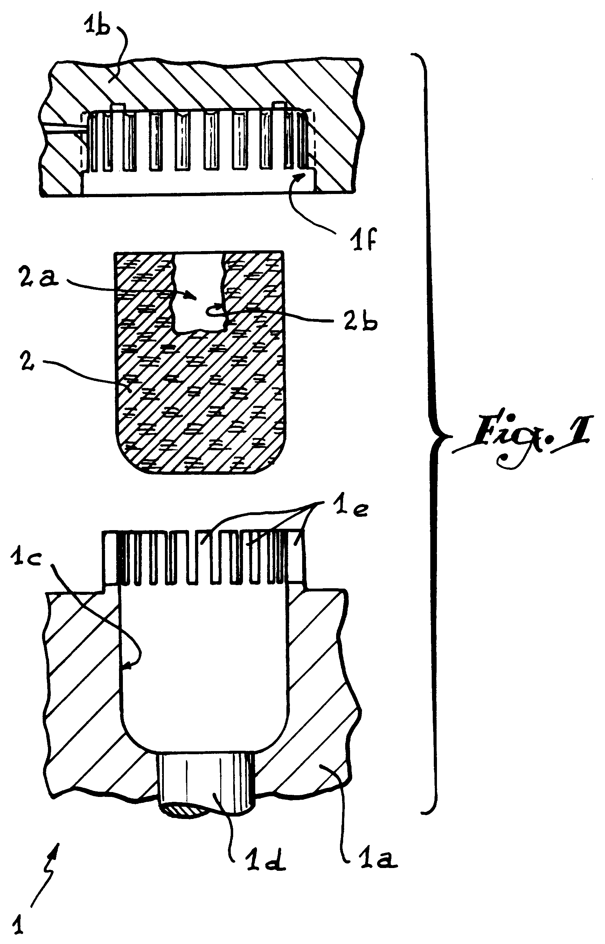

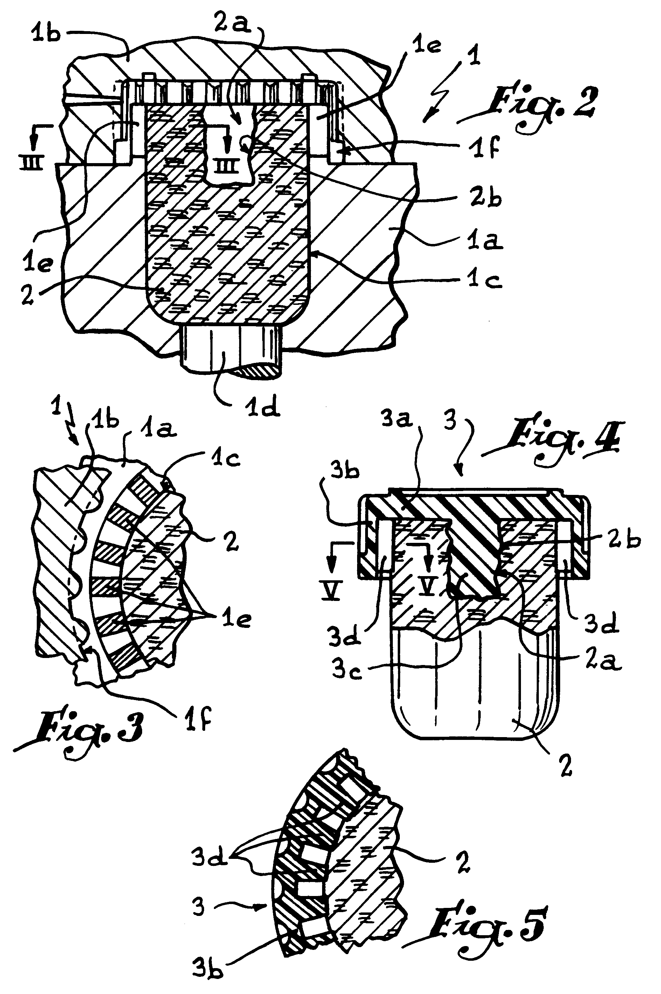

On a représenté en fig. 1 et 2 un moule 1 comportant une première partie 1a et une seconde partie 1b entre lesquelles est introduit un cylindre en liège 2 ou corps du bouchon à réaliser. La première partie 1a du moule 1 est percée d'un trou borgne 1c d'un diamètre suffisant pour permettre la mise en place du corps en liège 2. Le fond du trou 1c comporte, par exemple à la manière connue un éjecteur 1d pour évacuer le corps 2 après la phase de surmoulage. Dans la partie supérieure du trou 1c est prévue une série de nervures 1e qui sont dirigées en direction de son milieu, de manière que chaque nervure soit en contact avec la périphérie du corps cylindrique en liège 2 (fig. 3).

La hauteur des nervures 1e est prévue pour venir au même niveau que celui du bord supérieur libre du corps cylindrique 2 lorsque ce dernier est introduit dans le moule 1 (fig. 2).

La seconde partie 1b du moule 1 présente un diamètre interne 1f supérieur à celui des nervures 1e de manière à créer, avec la première partie 1a du moule 1 un espace libre, suffisant pour former la tête du bouchon.

Avant la mise en place à l'intérieur du moule 1, le corps cylindrique en liège 2 est percé en son milieu d'un trou borgne 2a.

Une fois le moule fermé, on injecte une matière plastique sous pression de manière qu'elle remplisse l'espace libre précité formé entre la première partie 1a et la seconde partie 1b, en vue de mouler une capsule ou tête 3 solidaire dudit cylindre 2.

En fig. 4 et 5, on a montré le bouchon suivant la présente invention terminé, c'est-à-dire que son corps cylindrique en liège 2 est rendu solidaire de la tête en matière plastique 3. Cette dernière comporte un fond 3a dont la périphérie est solidaire d'une jupe verticale 3b. Au centre de la face interne du fond 3a figure un noyau vertical 3c qui est obtenu par la pénétration de la matière plastique dans le trou borgne 2a ménagé dans le corps 2.

Le trou borgne 2a comporte une multitude d'aspérités 2b permettant lors du surmoulage une amélioration de la retenue de la tête 3 sur le corps cylindrique 2 du fait de la pénétration de la matière plastique dans lesdites aspérités 2b.

Le noyau 3c obtenu lors du surmoulage dépasse du bord périphérique inférieur de la jupe verticale 3b pour permettre d'augmenter la rigidité de l'assemblage et d'accroître la résistance aux efforts de cisaillement/traction lors du retrait du bouchon.

La face interne de la jupe 3b est solidaire d'une série de dents radiales 3d qui sont dirigées en direction du centre de la tête 3 (fig. 5). Le diamètre interne des dents 3d est inférieur à celui externe du corps 2 afin de déterminer avec le noyau 3c la retenue par pincement de la partie supérieure dudit corps 2 sur une hauteur suffisante.

Les dents 3d peuvent être conformées suivant une couronne continue ou discontinue dont le diamètre est inférieur à celui externe du corps 2. La hauteur des dents 3d ou de la couronne continue ou discontinue est sensiblement équivalente à celle de la jupe verticale 3b pour constituer une surface de pincement suffisante entre la tête 3 et le corps 2.

On constate que le pincement du corps 2 lors du surmoulage de la tête 3 est augmenté par un retrait de la matière plastique d'environ 2% permettant un renforcement de liaison de la tête 3 avec le corps 2.

On note que la matière plastique pénètre à l'intérieur du corps en liège 2 du fait de sa porosité créant un thermocollage entre la tête 3 et ledit corps 2. Le thermocollage est réalisé par la différence de température entre la matière plastique et le corps 2 lors du surmoulage.

On remarque qu'un tel bouchon répond parfaitement aux normes alimentaires car il n'utilise aucune colle, tout en présentant une solidité bien supérieure à celle des bouchons comportant des têtes collées.

## Revendications

1. Bouchon pour récipient constitué de deux matières différentes, du genre comprenant une capsule ou tête en matière plastique rendue solidaire d'un corps en liège, caractérisé en ce que la tête (3) en matière plastique comprend un fond (3a) bordé sur sa périphérie d'une jupe verticale (3b), un noyau (3c) s'étendant au milieu du fond (3a) pour coopérer lors du surmoulage de la tête (3) autour du corps cylindrique en liège (2) avec un trou borgne (2a) percé au centre dudit corps (2), tandis qu'une série de dents ou couronne continue (3d) dont le diamètre interne est inférieur à celui externe du corps (2) sont prévues pour pincer ce dernier sur une hauteur suffisante entre lesdites dents ou couronne (3d) et le noyau (3c).

2. Bouchon suivant la revendication 1, caractérisé en ce que les dents ou couronne (3d) prévues sur la face interne de la jupe (3b) sont dirigées en direction du centre de la tête (3).

3. Bouchon suivant la revendication 1, caractérisé en ce que la hauteur des dents ou couronne (3d) est sensiblement équivalente à celle de la jupe verticale (3b) pour constituer une surface de pincement suffisante entre la tête (3) et le corps (2).

4. Bouchon suivant la revendication 1, caractérisé en ce que le noyau (3c) dépasse le bord périphérique inférieur de la jupe (3b) pour augmenter la rigidité de l'assemblage.

5. Bouchon suivant la revendication 1, caractérisé en ce que le trou borgne (2a) du corps cylindrique (2) comporte une multitude d'aspérités (2b).

## Claims

1. A stopper for a receptacle formed of two different materials, of the type comprising a capsule or head of plastics material made integral with a cork body, characterised in that the head (3) of plastics material comprises a base (3a) bordered on its periphery by a vertical skirt (3b), a core (3c) extending into the centre of the base (3a) to cooperate when the head (3) is moulded on around the cylindrical cork body (2) with a blind hole (2a) formed in the centre of said body (2), whilst a series of teeth or continuous crown (3d) the internal diameter of which is less than the external diameter of the body (2) is provided for gripping the latter over a sufficient height between said teeth or crown (3d) and the core (3c).

2. A stopper according to Claim 1, characterised in that the teeth or crown (3d) provided on the inner face of the skirt (3b) is/are directed towards the centre of the head (3).

3. A stopper according to Claim 1, characterised in that the height of the teeth or crown (3d) is substantially equivalent to that of the vertical skirt (3b) to form a sufficient gripping surface between the head (3) and the body (2).

4. A stopper according to Claim 1, characterised in that the core (3c) extends beyond the lower peripheral edge of the skirt (3b) to increase the rigidity of the assembly.

5. A stopper according to Claim 1, characterised in that the blind hole (2a) of the cylindrical body (2) comprises a multitude of roughened areas (2b).

## Patentansprüche

1. Behälterstopfen, welcher aus zwei unterschiedlichen Materialien gebildet ist und eine fest mit einem Korkkörper verbundene Kapsel oder einen fest mit einem Korkkörper verbundenen Kopf aus Kunststoff aufweist, **dadurch gekennzeichnet**, daß der Kunststoffkopf (3) einen an seinem Umfang durch eine vertikale Schürze (3b) begrenzten Boden (3a) und einen Kern (3c) aufweist, der sich in der Mitte des Bodens (3a) zum Zusammenwirken wahrend des Abformens des Kopfes (3) um den zylindrischen Korkkörper (2) herum mit einem in die Mitte des Körpers (2) gebohrten Sackloch (2a) erstreckt, während eine Reihe von Zähnen oder ein fortlaufender Kranz (3d), deren/dessen Innendurchmesser geringer als der Außendurchmesser des Körpers (2) ist, zum Einklemmen des letzteren über eine ausreichende Höhe zwischen den Zähnen oder dem Kranz (3d) und dem Kern (3c) vorgesehen ist.

2. Stopfen nach Anspruch 1, **dadurch gekennzeichnet,** daß die auf der Innefläche der Schürze (3b) vorgesehenen Zähne oder der dort vorgesehene Kranz (3d) zur Mitte des Kopfes (3) hin gerichtet sind.

3. Stopfen nach Anspruch 1, **dadurch gekennzeichnet**, daß die Höhe der Zahne oder des Kranzes (3d) etwa derjenigen der vertikalen Schürze (3b) entspricht, um eine ausreichende Klemmfläche zwischen dem Kopf (3) und dem Körper (2) zu bilden.

4. Stopfen nach Anspruch 1, **dadurch gekennzeichnet**, daß der Kern (3c) den unteren, umfangsseitigen Rand der Schürze (3b) zum Erhöhen der Festigkeit der Verbindung überragt.

5. Stopfen nach Anspruch 1, **dadurch gekennzeichnet**, daß das Sackloch (2a) des zylindrischen Körpers (2) eine Vielzahl von Unebenheiten (2b) aufweist.
